# EUROPEAN PATENT SPECIFICATION

(11) **EP 4 039 661 B1**
(45) Date of publication and mention of the grant of the patent: **10.04.2024**
(21) Application number: 20870512.9
(22) Date of filing: 14.09.2020
(51) Int. Cl.: C03C 3/068, C03C 3/15, C03C 3/155, C03C 4/08, G21F 1/06

(54) **X-RAY SHIELDING GLASS AND GLASS COMPONENT**
RÖNTGENABSCHIRMUNGSGLAS UND GLASKOMPONENTE
VERRE DE PROTECTION CONTRE LES RAYONS X, ET COMPOSANT EN VERRE

(30) Priority: 30.09.2019 JP 2019180546
(43) Date of publication of application: 10.08.2022
(73) Proprietor: Sumita Optical Glass, Inc., Saitama-shi, Saitama 330-8565 (JP)
(72) Inventor: YAMAMOTO Yoshinori, Saitama-shi, Saitama 330-8565 (JP); NAKAYAMA Tomoyuki, Saitama-shi, Saitama 330-8565 (JP); SAKAI Takuya, Saitama-shi, Saitama 330-8565 (JP); TOMITA Kosuke, Saitama-shi, Saitama 330-8565 (JP)
(74) Representative: Scott, Stephen John
(86) International application number: PCT/JP2020/034794
(87) International publication number: WO 2021/065456

(56) References cited:
- WO-A1-2007/077681
- JP-A- S5 490 218
- JP-A- S52 155 614
- JP-A- 2007 290 899
- JP-A- 2008 088 019
- JP-A- 2008 088 019
- JP-A- 2008 088 021
- JP-A- 2012 197 217
- JP-A- 2012 229 148

## Description

### TECHNICAL FIELD

The present disclosure relates to an X-ray shielding glass and a glass component.

### BACKGROUND

In facilities where radiation is handled, including medical facilities such as an X-ray room in the hospital, research facilities, or nuclear power plants, radiation shielding glass is used in terms of the ease of working and in terms of protecting people in the facilities from radiation. Such glass is typically required of high visible light transmissivity (transparency) and high radiation shielding capability (absorption capability). Since the shielding capability is proportional to the mass absorption coefficient and the density of glass, lead glass having high density has been used as radiation shielding glass for a long time.

However, a lead component is a toxic substance. Therefore, when producing, processing, and discarding radiation shielding glass containing a large amount of a lead component, measures need to be taken for environmental protection, resulting in increased cost. Further, for radiation shielding glass containing a large amount of the lead component, when the surface of the glass is cleaned to remove contaminants on the surface, "dimming and staining" of the glass surface occurs, and this "dimming and staining" significantly reduces the transparency of the glass.

To address the above-described problems, radiation shielding glass free of a lead component has been under development.

As such glass, for example, JP H06-127973 A (PTL 1) discloses a SiOz-BaO-based radiation shielding glass having a density of 3.01 g/cm³ or more. Further, JP 2013-220984 A (PTL 2) discloses a P₂O₅-WO₃-based glass having high radiation shielding ability. Moreover, JP 2008-088019 A (PTL 3) and JP 2008-088021 A (PTL 4) disclose a B₂O₃-La₂O₃-based glass having high radiation shielding performance.

Furthermore, in recent years, certain medical fields require high shielding capability against radiation especially against X-rays with a tube voltage of 150 kV or less.

### CITATION LIST

### Patent Literature

PTL 1: JP H06-127973 A
PTL 2: JP 2013-220984 A
PTL3: JP 2008-088019 A
PTL 4: JP 2008-088021 A

### SUMMARY

### (Technical Problem)

However, none of the glasses disclosed in PTLs 1 to 4 above had sufficient shielding capability against X-rays with a tube voltage of 150 kV or less. In particular, the radiation shielding glass disclosed in PTL 1 had low density, so that its X-ray shielding performance was not sufficient. Further, the glass disclosed in PTL 2 was colored yellow or blue and had low visible light transmissivity, so that the inside of a system in which X-rays were used was considered to be hardly observed.

The present disclosure advantageously solves the above problems, and it could be helpful to provide an X-ray shielding glass having high shielding capability against X-rays with a tube voltage of 150 kV or less. Further, it could be helpful to provide a glass component that uses the above-described X-ray shielding glass and has high shielding capability against X-rays with a tube voltage of 150 kV or less.

### (Solution to Problem)

The inventors of the present disclosure diligently made studies to achieve the above objectives, and found that for example, since the glasses disclosed in PTL 3 and PTL 4 contain a certain amount of ZnO, TiOz, LizO, etc. having a relatively lower molar weight, the ratio of components contributing to the improvement in the X-ray shielding performance was low and the shielding capability against X-rays, in particular, X-rays with a tube voltage of 150 kV or less was not sufficient.

The present inventors made further studies, and found that a glass having a certain composition including B₂O₃, La₂O₃, Gd₂O₃, and WO₃ as essential components and including a predetermined metal oxide had high shielding capability against X-rays with a tube voltage of 150 kV or less. These findings led to the present disclosure.

Specifically, an X-ray shielding glass of the present disclosure has a composition including:
15 mass% to 25 mass% B₂O_{3;}
7 mass% to 50 mass% La₂O₃;
7 mass% to 50 mass% Gd₂O₃;
10 mass% to 25 mass% WO₃;
0 mass% to 7 mass% SiOz;
0 mass% to 10 mass% ZrOz;
0 mass% to 8 mass% Nb₂O₅;
0 mass% to 10 mass% Ta₂O₅;
0 mass% to 5 mass% Bi₂O₃;
0 mass% to 3 mass% CeOz; and
0 mass% to 1 mass% Sb₂O₃.

The glass does not contain ZnO, and
the total content of La₂O₃ and Gd₂O₃ in the glass is 45 mass% to 65 mass%.

When the thickness of the glass is 3 mm, the transmittance of the glass to an X-ray from an X-ray tube with a tube voltage of 60 kV is 0.0050 % or less, and the transmittance of the glass to an X-ray from an X-ray tube with a tube voltage of 100 kV is 0.1500 % or less. Such an X-ray shielding glass has high shielding capability against X-rays with a tube voltage of 150 kV or less.

The density of the X-ray shielding glass of the present disclosure is preferably 5.00 g/cm³ or more.

The refractive index (nd) of the X-ray shielding glass of the present disclosure is preferably 1.855 or less.

For the X-ray shielding glass of the present disclosure, the total content of La₂O₃, Gd₂O₃, and WO₃ is preferably 36 mol% or more.

Further, a glass component of the present disclosure uses the X-ray shielding glass described above as a material. Such a glass component has high shielding capability against X-rays with a tube voltage of 150 kV or less.

### (Advantageous Effect)

The present disclosure can provide an X-ray shielding glass having high shielding capability against X-rays with a tube voltage of 150 kV or less. Further, the present disclosure can provide a glass component that uses the above-described X-ray shielding glass and has high shielding capability against X-rays with a tube voltage of 150 kV or less.

### DETAILED DESCRIPTION

### (X-ray shielding glass)

An X-ray shielding glass according to one embodiment of the present disclosure (hereinafter may also be referred to as "glass of this embodiment") will now be described. The requirements for the composition of the glass of this embodiment include that the composition contains:
15 mass% to 25 mass% B₂O₃;
7 mass% to 50 mass% La₂O₃;
7 mass% to 50 mass% Gd₂O₃;
10 mass% to 25 mass% WO₃;
0 mass% to 7 mass% SiOz;
0 mass% to 10 mass% ZrOz;
0 mass% to 8 mass% Nb₂O₅;
0 mass% to 10 mass% Ta₂O₅;
0 mass% to 5 mass% Bi₂O₃;
0 mass% to 3 mass% CeOz; and
0 mass% to 1 mass% Sb₂O₃,
no ZnO is contained, and
the total content of La₂O₃ and Gd₂O₃ in the glass is 45 mass% to 65 mass%. Further, property requirements for the glass of this embodiment are that when the thickness of the glass is 3 mm, the transmittance of the glass to X-rays from an X-ray tube with a tube voltage of 60 kV is 0.0050 % or less, and the transmittance of the glass to X-rays from an X-ray tube with a tube voltage of 100 kV is 0.1500 % or less.

The glass of this embodiment is not only useful for shielding against X-rays from X-ray tubes with tube voltages of 60 kV and 100 kV but also for shielding against X-rays emitted from a tube with a given voltage of 150 kV or less. Further, the tube voltage of the X-ray tube emitting the X-ray which the glass of this embodiment blocks is more preferably 130 kV or less, still more preferably 120 kV or less.

The above glass composition has been found through repeated experiments, and the limitations of the components are based on the following reasons.

### < B₂O₃ >

B₂O₃ is an oxide enabling glass formation, and is an essential component critical for obtaining highly transparent glass without devitrification in the glass of this embodiment that contains a large amount of rare earth oxides such as La₂O₃ and Gd₂O₃. Now, when the content of B₂O₃ is less than 15 mass%, the stability of the glass would not be increased sufficiently, which precludes vitrification. On the other hand, when the content of B₂O₃ exceeds 25 mass%, the chemical durability of the glass is reduced and the ratio of components contributing to the improvement in the X-ray shielding performance is reduced, which precludes the X-ray shielding performance from being sufficiently improved. Accordingly, for the glass of this embodiment, the content of B₂O₃ is set in a range of 15 mass% to 25 mass%. In similar terms, the content of B₂O₃ in the glass of this embodiment is preferably 16 mass% or more and preferably 24 mass% or less.

### < La₂O₃ >

La₂O₃ is an essential component critical for achieving the objectives in the present disclosure, which can increase the density of glass and can impart high X-ray shielding capability to the glass. Further, La₂O₃ has the effect of improving the chemical durability of glass. Now, when the content of La₂O₃ is less than 7 mass%, the X-ray shielding capability of the glass cannot be increased sufficiently. On the other hand, when the content of La₂O₃ exceeds 50 mass%, the effect of an absorption edge in the radiation energy band is greatly exerted, which impairs the X-ray shielding capability. Accordingly, for the glass of this embodiment, the content of La₂O₃ is set in a range of 7 mass% to 50 mass%. In similar terms, the content of La₂O₃ in the glass of this embodiment is preferably 10 mass% or more and preferably 49 mass% or less.

### < Gd₂O₃ >

Similar to La₂O₃, Gd₂O₃ is an essential component critical for achieving the objectives in the present disclosure, which can increase the density of glass and can impart high X-ray shielding capability to the glass. Further, similar to La₂O₃, Gd₂O₃ has the effect of improving the chemical durability of glass. Now, when the content of Gd₂O₃ is less than 7 mass%, the X-ray shielding capability of the glass cannot be increased sufficiently. On the other hand, when the content of Gd₂O₃ exceeds 50 mass%, the effect of an absorption edge in the radiation energy band is greatly exerted, which impairs the X-ray shielding capability. Accordingly, for the glass of this embodiment, the content of Gd₂O₃ is set in a range of 7 mass% to 50 mass%. In similar terms, the content of Gd₂O₃ in the glass of this embodiment is preferably 8 mass% or more and preferably 48 mass% or less.

### < La₂O₃ + Gd₂O₃ >

As described above, both La₂O₃ and Gd₂O₃ are components that can increase the density of glass, and can impart high X-ray shielding capability to glass; using considerable amounts of those components can more effectively improve X-ray shielding capability and devitrification resistance of glass than using one of the components alone. For the glass of this embodiment, in terms of achieving such an effective improvement, the total content of La₂O₃ and Gd₂O₃ is set in a range of 45 mass% to 65 mass%. Further, the total content of La₂O₃ and Gd₂O₃ in the glass of this embodiment is preferably 50 mass% or more and preferably 62 mass% or less.

### < WO₃ >

WO₃ is an essential component critical for achieving the objectives in the present disclosure, which can increase the shielding capability against X-rays with a tube voltage of 150 kV or less. Further, WO₃ is significantly effective in improving stability and chemical durability of glass. Now, when the content of WO₃ is less than 10 mass%, the shielding capability against X-rays with a tube voltage of 150 kV or less cannot be increased sufficiently. On the other hand, a content of WO₃ exceeding 25 mass% rather reduces the stability of glass, which precludes vitrification. Accordingly, for the glass of this embodiment, the content of WO₃ is set in a range of 10 mass% to 25 mass%. In similar terms, the content of WO₃ in the glass of this embodiment is preferably 24 mass% or less.

### < La₂O₃ + Gd₂O₃ + WO₃ (mol%) >

For the glass of this embodiment, the total content of La₂O₃, Gd₂O₃, and WO₃ is preferably 36 mol% or more. When the above total content is 36 mol% or more, both mass ratio and molar ratio of La₂O₃, Gd₂O₃, and WO₃ that contribute to the improvement in the X-ray shielding performance are sufficiently high, which can further improve the X-ray shielding capability of the glass. In similar terms, the total content of La₂O₃, Gd₂O₃, and WO₃ in the glass of this embodiment is more preferably 36.5 mol% or more.

### < SiO₂ >

SiOz is an oxide enabling glass formation, and is a component that can improve the stability against devitrification and can improve the chemical durability of glass. However, when the content of SiO₂ exceeds 7 mass%, fusibility is degraded and unmelted materials are likely to remain. Accordingly, for the glass of this embodiment, the content of SiOz is set in a range of 0 mass% to 7 mass%. In similar terms, the content of SiOz in the glass of this embodiment is preferably 6 mass% or less, more preferably 5 mass% or less. Further, the content of SiO₂ in the glass of this embodiment is preferably more than 0 mass%, more preferably 1 mass% or more, still more preferably 2 mass% or more in terms of improving the fusibility, stability, and chemical durability of the glass.

### < ZrO₂ >

ZrO₂ is a component that can be used for the glass of this embodiment, since it has the effect of improving X-ray shielding capability and chemical durability. However, when the content of ZrO₂ exceeds 10 mass%, the stability against devitrification would be degraded. Accordingly, for the glass of this embodiment, the content of ZrO₂ is set in a range of 0 mass% to 10 mass%. In similar terms, the content of ZrO₂ in the glass of this embodiment is preferably 9 mass% or less, more preferably 8 mass% or less. Further, the content of ZrOz in the glass of this embodiment is preferably more than 0 mass%, more preferably 1 mass% or more, still more preferably 2 mass% or more in terms of further improving the X-ray shielding capability and the chemical durability of the glass.

### < Nb₂O₅ >

Nb₂O₅ is a component that can be used for the glass of this embodiment, since it has the effect of improving X-ray shielding performance. However, when the content of Nb₂O₅ exceeds 8 mass%, the stability against devitrification would be degraded. Accordingly, for the glass of this embodiment, the content of Nb₂O₅ is set in a range of 0 mass% to 8 mass%. In similar terms, the content of Nb₂O₅ in the glass of this embodiment is preferably 7 mass% or less, more preferably 6 mass% or less. Further, the content of Nb₂O₅ in the glass of this embodiment is preferably more than 0 mass%, more preferably 0.5 mass% or more, still more preferably 1 mass% or more in terms of further improving the X-ray shielding capability.

### < Ta₂O₅ >

TazOs is a component that can be used for the glass of this embodiment, since it has the effect of improving X-ray shielding performance. However, since TazOs is an extremely expensive material, it is not suitable for use in large quantity. Accordingly, for the glass of this embodiment, the content of TazOs is set in a range of 0 mass% to 10 mass%. In similar terms, the content of Ta₂O₅ in the glass of this embodiment is preferably 8 mass% or less.

### < Bi₂O₃ >

Bi₂O₃ is a component that can be used for the glass of this embodiment, since it has a high shielding effect particularly against X-rays with a tube voltage of more than 100 kV. However, although Bi₂O₃ is used in large quantity, the shielding capability against X-rays with a tube voltage of 150 kV or less is not significantly improved. Further, when the content of Bi₂O₃ exceeds 5 % mass%, the transmittance of light in the ultraviolet range to the visible range is reduced. Accordingly, for the glass of this embodiment, the content of Bi₂O₃ is set in a range of 0 mass% to 5 mass%.

### < CeOz >

CeO₂ is a component that can be used for the glass of this embodiment, since it has the effect of reducing coloration of glass due to X-ray irradiation. However, when CeOz is used in large quantity, the absorption edge of the glass in the ultraviolet range to the visible range is shifted to the long wavelength side, which reduces the visible light transmissivity. Accordingly, for the glass of this embodiment, the content of CeOz is set in a range of 0 mass% to 3 mass%.

### < Sb₂O₃ >

Sb₂O₃ is a component that can be used in order to perform degassing during the glass melting. Accordingly, for the glass of this embodiment, the content of Sb₂O₃ is set in a range of 0 mass% to 1 mass% in terms of obtaining the degassing effect with the minimum essential amount.

### < Other components >

The glass of this embodiment may contain components other than the above components, for example, CsO₂, SrO, BaO, Y₂O₃, Yb₂O₃, etc. as appropriate without departing from the objectives.

Although ZnO is a component that effectively improves the fusibility of glass, it has been found not to greatly contribute to the improvement in the X-ray shielding performance of the glass of this embodiment. Further, since the molecular weight of ZnO is relatively low, the ratio of La₂O₃, Gd₂O₃, and WO₃ that contribute to the improvement in the X-ray shielding performance is undesirably reduced even when ZnO is used in small quantity. Therefore, in terms of maintaining the ratio of La₂O₃, Gd₂O₃, and WO₃ that contribute to the improvement in the X-ray shielding performance, ZnO is not contained in the glass of this embodiment.

Further, components containing transition metals (excluding La, Gd, W, Zr, Nb, Ta, and Ce) such as Ti, V, Cr, Mn, Fe, Co, Ni, Cu, Ag, and Mo color the class and allow the absorption of light with a certain wavelength in the visible range even when the components are used alone or in combination in small quantity. In particular, since the molecular weight of Ti, V, Cr, Mn, Fe, Co, Ni, and Cu is relatively low, the ratio of La₂O₃, Gd₂O₃, and WO₃ that contribute to the improvement in the X-ray shielding performance is undesirably reduced even when those elements are used alone or in combination in small quantity. Accordingly, it is preferred that the glass of this embodiment does not substantially contain components having the above-described transition metals.

In this specification, "does not substantially contain" means to include cases where the components concerned are inevitably contained as impurities, specifically, where the relevant components are contained in a ratio of 0.2 mass% or less.

Further, in recent years, there are tendencies to avoid the use of components having Pb, Th, Cd, Tl, or Os as hazardous chemical substances; therefore, measures are required to be taken for environmental protection when glass using those components is produced, processed, and discarded. Accordingly, it is preferred that the glass of this embodiment does not substantially contain any component having Pb, Th, Cd, Tl, or Os.

Further, fluorine components would be volatilized when glass is melted, and are further likely to cause striae. Accordingly, it is preferred that the glass of this embodiment does not substantially contain fluorine components.

Further, since the molecular weight of Li, Na, K, Be, Mg, and Ca is low, the ratio of La₂O₃, Gd₂O₃, and WO₃ that contribute to the improvement in the X-ray shielding performance is undesirably reduced greatly even when those elements are used alone or in combination in small quantity. Accordingly, it is preferred that the glass of this embodiment does not substantially contain any component having Li, Na, K, Be, Mg, or Ca.

In terms of further ensuring the desired properties to be obtained, the glass of this embodiment preferably has a composition consisting only of the essential components described above and optional components (a composition that may contain only B₂O₃, La₂O₃, Gd₂O₃, and WO₃ as the essential components and components selected from SiOz, ZrOz, Nb₂O₅, Ta₂O₅, Bi₂O₃, CeO₂, and Sb₂O₃).

In this specification, "consist only of the above components" include cases where impurity components other than the components concerned are inevitably contained, specifically case where the ratio of the impurity components is 0.2 mass% or less.

The following describes the properties of the glass of this embodiment.

The density of the glass of this embodiment is preferably 5.00 g/cm³ or more. Since the X-ray shielding capability is likely to be higher as the density of the glass is higher, a glass density of 5.00 g/cm³ or more results in better X-ray shielding capability. In similar terms, the density of the glass of this embodiment is more preferably 5.05 g/cm³ or more and still more preferably 5.10 g/cm³ or more.

The density of the glass may be, for example, controlled by appropriately selecting the kind and/or the content of the components to be contained in the glass. Further, a glass having a density of 5.00 g/cm³ or more can be usually obtained by fulfilling the requirements for the glass composition described above.

The above-described density can be measured by the method to be described in Examples.

For the glass of this embodiment, when the thickness of the glass is 3 mm, the transmittance of the glass to X-rays from an X-ray tube with a tube voltage of 60 kV is 0.0050 % or less, and the transmittance of the glass to X-rays from an X-ray tube with a tube voltage of 100 kV is 0.1500 % or less. The glass of this embodiment has the above-described properties, so that high shielding capability can be brought out against X-rays from an X-ray tube with a tube voltage of 150 kV or less.

The transmittance of the glass to X-rays from an X-ray tube with a tube voltage of 60 kV and the transmittance to X-rays from an X-ray tube with a tube voltage of 100 kV may be, for example, controlled by appropriately selecting the kind and/or the content of the components to be contained in the glass. Further, a glass having a transmittance of 0.0050 % or less to X-rays from an X-ray tube with a tube voltage of 60 kV and a transmittance of 0.1500 % or less to X-rays from an X-ray tube with a tube voltage of 100 kV can usually be obtained by fulfilling the requirements for the glass composition described above. In particular, a glass having a transmittance of 0.0050 % or less to X-rays from an X-ray tube with a tube voltage of 60 kV and a transmittance of 0.1500 % or less to X-rays from an X-ray tube with a tube voltage of 100 kV satisfies the above-described glass composition requirements and can be more reliably obtained when the total content of La₂O₃, Gd₂O₃, and WO₃ is 36 mol% or more.

The above-described X-ray transmittance can be measured by the method to be described in Examples.

The glass of this embodiment with a thickness of 10 mm preferably has a transmittance of 40 % or more to light with a wavelength of 400 nm. When the glass has the above-described transmittance, better visible light transmissivity can be brought out. In similar terms, the glass of this embodiment more preferably has a transmittance of 50 % or more, more preferably 55 % or more, to light with a wavelength of 400 nm.

The glass of this embodiment with a thickness of 10 mm preferably has a transmittance of 80 % or more to light with a wavelength of 550 nm. When the glass has the above-described transmittance, better visible light transmissivity can be brought out.

The visible light transmittance described above may be, for example, controlled by appropriately selecting the kind and/or the content of the components to be contained in the glass. Further, a glass having a transmittance within the preferred range mentioned above can be usually obtained by fulfilling the requirements for the glass composition described above.

The above-described visible light transmittance can be measured by the method to be described in Examples.

The refractive index (nd) of the glass of this embodiment is preferably 1.855 or less. The glass having the above refractive index is more useful, since the surface reflection of light incident upon the glass can be sufficiently reduced.

The refractive index of the glass may be, for example, controlled by appropriately selecting the kind and/or the content of the components to be contained in the glass. Further, a glass having a refractive index (nd) of 1.855 or less can be usually obtained by fulfilling the requirements for the glass composition described above.

The above-described refractive index can be measured by the method to be described in Examples.

### < Method of producing glass >

The following describes a method of producing the glass of this embodiment.

The method of producing the glass of this embodiment is not limited as long as the glass satisfies the above-described composition requirements and property requirements, and the glass can be produced in accordance with a conventional production method.

For example, as the raw material of each component that may be contained in the glass of this embodiment, oxides are prepared to have a weight at a predetermined ratio, and the oxides are fully mixed to obtain a preparation raw material. Next, the preparation raw material is charged into a melting container (for example, a crucible made of precious metal) that is not reactive with the material concerned, and the material is heated and melted at 1100 °C to 1500 °C in an electric furnace. During the heating, the material is stirred at the appropriate times to be refined and homogenized. Subsequently, the melt is cast into a metal mold preheated to an appropriate temperature, and was then allowed to cool slowly, thereby eliminating strains, thus the glass of this embodiment can be obtained.

### (Glass component)

A glass component of this embodiment (hereinafter may also be referred to as "glass component of this embodiment") uses the X-ray shielding glass described above as a material. In other words, the glass component of this embodiment includes the above-described X-ray shielding glass. The glass component of this embodiment uses the above-described X-ray shielding glass as a material, thus it has high shielding capability against X-rays from an X-ray tube with a tube voltage of 150 kV or less.

Examples of glass components include, but not limited to, lenses such as spherical lenses, aspherical lenses, microlenses, and rod lenses; arrays of lenses such as microlens arrays; preform materials; and fiber materials.

### EXAMPLES

X-ray shielding glasses of the present disclosure will be described in more concrete terms using Examples and Comparative Examples below; however, the present disclosure is not limited to Examples below.

Glasses according to Examples and Comparative Examples were produced by the following method.

### (Examples 1 to 14, Comparative Examples 1 to 9)

For the raw material of each component in the composition given in Table 1 and Table 2, an oxide corresponding to each component was used; the oxides were prepared to have a weight at the desired ratio, and the oxides were fully mixed to obtain preparation raw materials. Next, the preparation raw materials were charged into a platinum crucible and were melted at temperatures of 1100 °C to 1500 °C in an electric furnace for several hours and were meanwhile stirred with a platinum stirring rod at the appropriate times, thereby performing homogenization and refinement. After that, the materials were cast into a metal mold having been preheated to an appropriate temperature and were allowed to cool slowly, thus transparent and homogenous glasses were obtained (note however that glass was not obtained in Comparative Example 5 and Comparative Example 8).

Note that Comparative Examples 1 and 2 were examples corresponding to the compositions of Examples 1 and 2 in PTL 3 (JP 2008-088019 A), respectively; and Comparative Example 3 was an example corresponding to the composition of Example 1 in PTL 4 (JP 2008-088021 A).

Further, Table 1 and Table 2 give the compositions by mass, and the compositions were converted into the composition by mol for reference and the results are given in Table 3 and Table 4, respectively.

Each of the obtained glasses, was subjected to the calculation of X-ray transmittances (tube voltage of the X-ray tube: 60 kV and 100 kV), and the measurements of the density, the refractive index (nd), and the visible light transmittance (wavelength: 550 nm and 400 nm) by the following procedure The results are given in Table 1 and Table 2 (and Table 3 and Table 4).

### < X-ray transmittance >

When X-ray were incident on a glass, part of the X-rays was absorbed by the glass, and the rest was transmitted to exit; the X-ray transmittance was calculated as the ratio of the intensity of the exiting X-ray to the intensity of the incident X-rays. More specifically, the incident X-ray spectrum was calculated using the formula found by Tucker, et al., and the attenuation coefficient per energy was then calculated based on the information of the percentage by mass and the density of the elements forming the object to be measured (glass) with reference to the data specified by the National Institute of Standards and Technology (NIST). For the calculated incident X-ray spectrum, the X-rays transmitted through the measurement object was taken as transmitted X-rays, and (transmitted X-rays/incident X-rays) × 100 was defined as X-ray transmittance (%).

Note that in the calculation of the X-ray transmittance, a glass having been worked to have a thickness of 3 mm was used, and the transmittance was calculated for X-rays from X-ray tubes with a tube voltage of 60 kV and 100 kV.

### < Density >

The density of the glass was measured using "ED-120T" manufactured by Mirage Trading Co., Ltd. in accordance with "JIS Z 8807: 2012 Methods of measuring density and specific gravity of solid".

### < Refractive index (nd) >

The refractive index (nd) of the glass was measured using "KPR-2000" manufactured by Kalnew Optical Industrial Co., Ltd. in accordance with "JIS B 7071-2: 2018 Measuring method for refractive index of optical glass -- Part 2: Vee block refractometers method".

### < Visible light transmittance >

The glass obtained was worked into an opposite surface parallel polished product having a thickness of 10 mm, and the visible light transmittance of the glass was measured using "U-4100" manufactured by Hitachi, Ltd. in accordance with "JOGIS 02-2003 Measuring Method for Color-Degree of Optical Glass" of the Japan Optical Glass Industrial Standards. Note however that in this disclosure, the transmittance is specified instead of the color degree. Specifically, the spectral transmittance for 200 nm to 800 nm was measured in accordance with JIS Z 8722, and the transmittance for 400 nm and the transmittance for 550 nm were sought. Such transmittances being high indicate that the visible light transmissivity is high.

**[Table 1]**

| | | | Example 1 | Example 2 | Example 3 | Example 4 | Example 5 | Example 6 | Example 7 | Example 8 | Example 9 | Example 10 | Example 11 | Example 12 | Example 13 | Example 14 |
|---|---|---|---|---|---|---|---|---|---|---|---|---|---|---|---|---|
| B₂O₃ | | mass% | 18.5 | 15.5 | 22 | 18.5 | 18.5 | 18.5 | 18.5 | 18.5 | 18.5 | 18.5 | 18.48 | 17.62 | 18.5 | 18.5 |
| La₂O₃ | | | 32 | 32 | 32 | 32 | 32 | 32 | 32 | 32 | 22 | 12 | 25.97 | 30.48 | 32 | 47 |
| Gd₂O₃ | | | 25 | 25 | 25 | 27.5 | 25 | 25 | 25 | 30 | 35 | 45 | 25.02 | 19.05 | 24 | 10 |
| WO₃ | | | 13.5 | 16 | 12.5 | 12.5 | 18.5 | 15 | 17.5 | 10 | 15 | 15 | 21.98 | 23.81 | 12.5 | 15 |
| SiO₂ | | | 3.5 | 6 | | 3.5 | 3.5 | 3.5 | 3.5 | 3.5 | 3.5 | 3.5 | 3.5 | 3.28 | 3.5 | 3.5 |
| ZrO₂ | | | 7.5 | 2.5 | 2.5 | 2.5 | 2.5 | 2.5 | | 2.5 | 2.5 | 2.5 | 2.5 | 2.38 | 2.5 | 2.5 |
| Xb₂O₅ | | | | 3 | 6 | 3.5 | | | 3.5 | 3.5 | 3.5 | 3.5 | 2.5 | 3.33 | 0.5 | 3.5 |
| Ta₂O₅ | | | | | | | | | | | | | | | 6.5 | |
| Bi₂O₃ | | | | | | | | 3.5 | | | | | | | | |
| CeO₂ | | | | | | | | | | | | | | | | |
| Sb₂O₃ | | | | | | | | | | | | | 0.05 | 0.05 | | |
| Total | | | 100 | 100 | 100 | 100 | 100 | 100 | 100 | 100 | 100 | 100 | 100 | 100 | 100 | 100 |
| La₂O₃+Gd₂O₃ | | mass% | 57 | 57 | 57 | 59.5 | 57 | 57 | 57 | 62 | 57 | 57 | 51 | 49.53 | 56 | 57 |
| X-ray transmittance | @60 kV | % | 0.0012 | 0.0010 | 0.0014 | 0.0014 | 0.0009 | 0.0007 | 0.0012 | 0.0013 | 0.0016 | 0.0047 | 0.0013 | 0.0008 | 0.0010 | 0.0020 |
| | @100 kV | % | 0.1086 | 0.0889 | 0.1215 | 0.1033 | 0.0708 | 0.0792 | 0.0852 | 0.1010 | 0.0835 | 0.0718 | 0.0885 | 0.0829 | 0.0744 | 0.1412 |
| Density | | g/cm3 | 5.15 | 5.21 | 5.09 | 5.14 | 5.23 | 5.27 | 5.18 | 5.20 | 5.17 | 5.23 | 5.12 | 5.19 | 5.26 | 5.05 |
| Refractive index (nd) | | - | 1.84012 | 1.84469 | 1.84826 | 1.83853 | 1.84628 | 1.84116 | 1.84000 | 1.84266 | 1.83251 | 1.8242 | 1.83479 | 1.85001 | 1.83989 | 1.85001 |
| Visible light transmittance (550 nm/400 nm) | | % | 83/76 | 83/75 | 83/75 | 82/75 | 83/75 | 81/62 | 83/74 | 82/76 | 81/63 | 80/60 | 81/60 | 80/59 | 80/70 | 83/74 |

**[Table 2]**

| | | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|---|---|
| B₂O₃ | | mass% | 15.8 | 17.4 | 24 | 27 | is | 18.5 | 18.5 | 18.5 | 24.5 |
| La₂O₃ | | | 31.6 | 32.2 | 35 | 32 | 32 | 52 | 5 | 30 | 32 |
| Gd₂O₃ | | | 23.5 | 5.5 | 15 | 25 | 25 | 5 | 52 | 15 | 25 |
| WO₃ | | | 15 | 12.3 | 15 | 10 | 15 | 15 | 15 | 27 | 9 |
| SiO₂ | | | 3.8 | 4.6 | 5 | | 8 | 3.5 | 3.5 | 3.5 | 3.5 |
| ZrO₂ | | | | | | 2.5 | 2.5 | 2.5 | 2.5 | 2.5 | 2.5 |
| Nb₂O₅ | | | | | | 3.5 | 3.5 | 3.5 | 3.5 | 3.5 | 3.5 |
| Ta₂O₃ | | | | 10 | | | | | | | |
| Bi₂O₃ | | | | | | | | | | | |
| ZnO | | | 7.8 | 13.5 | 6 | | | | | | |
| Li₂O | | | | 0.5 | | | | | | | |
| TiO₂ | | | 2.5 | 3.6 | | | | | | | |
| CeO₂ | | | | | | | | | | | |
| Sb₂O₃ | | | | | | | | | | | |
| Total | | | 100 | 100 | 100 | 100 | 100 | 100 | 100 | 100 | 100 |
| La₂O₃+Gd₂O₃ | | mass% | 55.1 | 37.7 | 50 | 57 | 57 | 57 | 57 | 45 | 57 |
| X-ray transmittance | @60 kV | % | 0.0016 | 0.0061 | 0.0089 | 0.0045 | No vitrification | 0.0026 | 0.0125 | No vitrification | 0.0052 |
| | @100 kV | % | 0.1763 | 0.2811 | 0.2697 | 0.1961 | | 0.1609 | 0.0724 | | 0.2118 |
| Density | | g/cm3 | 5.25 | 4.85 | 4.66 | 4.79 | | 5.01 | 5.30 | | 4.78 |
| Refractive index (nd) | | - | 1.85512 | 1.84391 | 1.77714 | 1.80363 | | 1.85036 | 1.82363 | | 1.79775 |
| Visible light transmittance (550 nm/400 nm) | | % | 82/76 | 78/61 | 83/75 | 83/76 | | 83/75 | 81/62 | | 83/76 |

**[Table 3]**

| | | | Example 1 | Example 2 | Example 3 | Example 4 | Example 5 | Example 6 | Example 7 | Example 8 | Example 9 | Example 10 | Example 11 | Example 12 | Example 13 | Example 14 |
|---|---|---|---|---|---|---|---|---|---|---|---|---|---|---|---|---|
| B₂O₃ | | mol% | 43.54 | 37.72 | 54.49 | 45.39 | 44.94 | 45.53 | 45.83 | 45.69 | 45.33 | 45.57 | 44.45 | 43.01 | 45.88 | 44.74 |
| La₂O₃ | | | 16.1 | 16.64 | 16.93 | 16.78 | 16.61 | 16.83 | 16.94 | 16.89 | 11.52 | 6.32 | 13.35 | 15.9 | 16.96 | 24.29 |
| Gd₂O₃ | | | 11.3 | 11.68 | 11.89 | 12.96 | 11.67 | 11.81 | 11.89 | 14.23 | 16.47 | 21.29 | 11.56 | 8.93 | 11.43 | 4.64 |
| WO₃ | | | 9.54 | 11.69 | 9.3 | 9.21 | 13.5 | 11.08 | 13.02 | 7.42 | 11.04 | 11.09 | 15.88 | 17.45 | 9.31 | 10.89 |
| SiO₂ | | | 9.55 | 16.92 | | 9.95 | 9.85 | 9.98 | 10.05 | 10.02 | 9.94 | 9.99 | 9.76 | 9.27 | 10.05 | 9.81 |
| ZrO₂ | | | 9.97 | 3.44 | 3.5 | 3.46 | 3.43 | 3.48 | | 3.49 | 3.46 | 3.48 | 3.4 | 3.28 | 3.5 | 3.41 |
| Nb₂O₅ | | | | 1.91 | 3.89 | 2.25 | | | 2.27 | 2.26 | 2.24 | 2.26 | 1.57 | 2.13 | 0.33 | 2.22 |
| Ta₂O₅ | | | | | | | | | | | | | | | 2.54 | |
| Bi₂O₃ | | | | | | | | 1.29 | | | | | | | | |
| CeO₂ | | | | | | | | | | | | | | | | |
| Sb₂O₃ | | | | | | | | | | | | | 0.03 | 0.03 | | |
| Total | | | 100 | 100 | 100 | 100 | 100 | 100 | 100 | 100 | 100 | 100 | 100 | 100 | 100 | 100 |
| La₂O₃+Gd₂O₃+WO₃ | | mol% | 36.94 | 40.01 | 38.13 | 38.95 | 41.78 | 39.72 | 41.85 | 38.54 | 39.03 | 38.70 | 40.79 | 42.28 | 37.70 | 39.82 |
| X-ray transmittance | @60 kV | % | 0.0012 | 0.0010 | 0.0014 | 0.0014 | 0.0009 | 0.0007 | 0.0012 | 0.0013 | 0.0016 | 0.0047 | 0.0013 | 0.0008 | 0.0010 | 0.0020 |
| | @100 kV | % | 0.1086 | 0.0889 | 0.1215 | 0.1033 | 0.0708 | 0.0792 | 0.0852 | 0.1010 | 0.0835 | 0.0718 | 0.0885 | 0.0829 | 0.0744 | 0.1412 |
| Density | | g/cm3 | 5.15 | 5.21 | 5.09 | 5.14 | 5.23 | 5.27 | 5.18 | 5.20 | 5.17 | 5.23 | 5.12 | 5.19 | 5.26 | 5.05 |
| Refractive index (nd) | | - | 1.84012 | 1.84469 | 1.84826 | 1.83853 | 1.84628 | 1.84116 | 1.84000 | 1.84266 | 1.83251 | 1.8242 | 1.83479 | 1.85001 | 1.83989 | 1.85001 |
| Visible light transmittance (550 nm 400 nm) | | % | 83/76 | 83/75 | 83 75 | 82/75 | 83/75 | 81/62 | 83/74 | 82/76 | 81/63 | 80/60 | 81/60 | 80/59 | 80/70 | 83/74 |

**[Table 4]**

| | | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|---|---|
| B₃O₃ | | mol% | 35.25 | 33.6 | 48.2 | 61.4 | 33.34 | 44.62 | 43.74 | 43.75 | 54.17 |
| La₂O₃ | | | 15.06 | 13.29 | 15.02 | 15.55 | 16.38 | 26.8 | 2.64 | 15.16 | 15.12 |
| Gd₂O₃ | | | 10.07 | 2.04 | 5.79 | 10.92 | 11.5 | 2.32 | 24.69 | 6.81 | 10.62 |
| WO₃ | | | 10.05 | 7.13 | 9.05 | 6.83 | 10.79 | 10.86 | 11.14 | 19.18 | 5.98 |
| SiO₂ | | | 9.82 | 10.29 | 11.63 | | 22.21 | 9.78 | 10.03 | 9.59 | 8.97 |
| ZrO₂ | | | | | | 3.21 | 3.38 | 3.41 | 3.49 | 3.34 | 3.12 |
| Nb₂O₃ | | | | | | 2.09 | 2.2 | 2.21 | 2.27 | 2.17 | 2.02 |
| Ta₂O₅ | | | | 3.04 | | | | | | | |
| Bi₂O₃ | | | | | | | | | | | |
| ZnO | | | 14.89 | 22.3 | 10.31 | | | | | | |
| Li₂O | | | | 2.25 | | | | | | | |
| TiO₂ | | | 4.86 | 6.06 | | | | | | | |
| CeO₂ | | | | | | | | | | | |
| Sb₂O₃ | | | | | | | | | | | |
| Total | | | 100 | 100 | 100 | 100 | 100 | 100 | 100 | 100 | 100 |
| La₂O₃+Gd₂O₃+WO₃ | | mol% | 35.18 | 22.46 | 29.56 | 33.30 | 38.67 | 39.98 | 38.47 | 41.15 | 31.72 |
| X-ray transmittance | @60 kV | % | 0.0016 | 0.0061 | 0.0089 | 0.0045 | No vitrification | 0.0026 | 0.0125 | No vitrification | 0.0052 |
| | @100 kV | % | 0.1763 | 0.2811 | 0.2697 | 0.1961 | | 0.1609 | 0.0724 | | 0.2119 |
| Density | | g/cm3 | 5.25 | 4.85 | 4.66 | 4.79 | | 5.01 | 5.30 | | 4.78 |
| Refractive index (nd) | | - | 1.85512 | 1.84391 | 1.77714 | 1.80363 | | 1.85036 | 1.82363 | | 1.79775 |
| Visible light transmittance (550 nm/400 nm) | | % | 82/76 | 78/61 | 83/75 | 83/76 | | 83/75 | 81/62 | | 83/76 |

Table 1 demonstrates that all the glasses of Examples 1 to 14 according to the present disclosure satisfied the predetermined requirements for the glass composition, and had an X-ray transmittance of 0.0050 % or less to X-rays from an X-ray tube with a tube voltage of 60 kV and had an X-ray transmittance of 0.1500 % or less to X-rays from an X-ray tube with a tube voltage of 100 kV. Thus, the glasses of Examples 1 to 14 were found to bring out high shielding capability against X-rays with a tube voltage of 150 kV or less. Note that all of the glasses of Examples 1 to 14 successfully had a density of 5.00 g/cm³ or more, and a refractive index (nd) of 1.855 or less.

On the other hand, Table 2 demonstrates that the transmittance of the glass of Comparative Example 1 to X-rays from an X-ray tube with a tube voltage of 100 kV exceeded 0.1500 %. This may be because since ZnO, TiO₂, etc. having a low molecular weight were contained in the glass, the ratio of La₂O₃, Gd₂O₃, and WO₃ contributing to the improvement in the X-ray shielding performance was low. Further, since the glass of Comparative Example 1 had a refractive index (nd) exceeding 1.855, there was a possibility of the surface reflection of incident light. This is considered to have been due to TiOz contained in the glass.

The glass of Comparative Example 2 had a transmittance of more than 0.0050 % to X rays from an X-ray tube with a tube voltage of 60 kV and a transmittance of more than 0.1500 % to X rays from an X-ray tube with a tube voltage of 100 kV. Further, the glass of Comparative Example 2 had a density of less than 5.00 g/cm³. This may be because since ZnO, TiOz, LizO etc. having a low molecular weight were contained in the glass, the ratio of La₂O₃, Gd₂O₃, and WO₃ contributing to the improvement in the X-ray shielding performance was low.

The glass of Comparative Example 3 had a transmittance of more than 0.0050 % to X rays from an X-ray tube with a tube voltage of 60 kV and a transmittance of more than 0.1500 % to X rays from an X-ray tube with a tube voltage of 100 kV. Further, the glass of Comparative Example 3 had a density of less than 5.00 g/cm³. This may be because since ZnO etc. having a low molecular weight were contained in the glass, the ratio of La₂O₃, Gd₂O₃, and WO₃ contributing to the improvement in the X-ray shielding performance was low.

The transmittance of the glass of Comparative Example 4 to X-rays from an X-ray tube with a tube voltage of 100 kV exceeded 0.1500 %. This may be because the content of B₂O₃ was excessively high.

In Comparative Example 5, no vitrification occurred. This might have been due to the excessively low content of B₂O₃ and the excessively high content of SiOz.

The transmittance of the glass of Comparative Example 6 to X-rays from an X-ray tube with a tube voltage of 100 kV exceeded 0.1500 %. This may be attributed to that for example, since the content of La₂O₃ was excessively high (and the content of Gd₂O₃ was excessively low), the effect of the absorption edge of the radiation energy band of La₂O₃ was greatly exerted.

The transmittance of the glass of Comparative Example 7 to X-rays from an X-ray tube with a tube voltage of 60 kV exceeded 0.0050 %. This may be attributed to that for example, since the content of Gd₂O₃ was excessively high (and the content of La₂O₃ was excessively low), the effect of the absorption edge of the radiation energy band of Gd₂O₃ was greatly exerted.

In Comparative Example 8, no vitrification occurred. This may be because the content of WO₃ was excessively high.

The glass of Comparative Example 9 had a transmittance of more than 0.0050 % to X rays from an X-ray tube with a tube voltage of 60 kV and a transmittance of more than 0.1500 % to X rays from an X-ray tube with a tube voltage of 100 kV. This may be because the content of WO₃ was excessively low.

### INDUSTRIAL APPLICABILITY

The present disclosure provides an X-ray shielding glass having high shielding capability against X-rays with a tube voltage of 150 kV or less. Further, the present disclosure provides a glass component that uses the above-described X-ray shielding glass and has high shielding capability against X-rays with a tube voltage of 150 kV or less.

## Claims

1. An X-ray shielding glass having a composition comprising:
15 mass% to 25 mass% B₂O₃;
7 mass% to 50 mass% La₂O₃;
7 mass% to 50 mass% Gd₂O₃;
10 mass% to 25 mass% WO₃;
0 mass% to 7 mass% SiOz;
0 mass% to 10 mass% ZrOz;
0 mass% to 8 mass% Nb₂O₅;
0 mass% to 10 mass% Ta₂O₅;
0 mass% to 5 mass% Bi₂O₃;
0 mass% to 3 mass% CeOz; and
0 mass% to 1 mass% Sb₂O₃,
wherein the glass contains no ZnO,
a total content of La₂O₃ and Gd₂O₃ is 45 mass% to 65 mass%, and
when a thickness of the glass is 3 mm, a transmittance of the glass to an X-ray from an X-ray tube with a tube voltage of 60 kV is 0.0050 % or less, and a transmittance of the glass to an X-ray from an X-ray tube with a tube voltage of 100 kV is 0.1500 % or less.

2. The X-ray shielding glass according to Claim 1, having a density of 5.00 g/cm³ or more.

3. The X-ray shielding glass according to Claim 1 or 2, having a refractive index (nd) of 1.855 or less.

4. The X-ray shielding glass according to any one of Claims 1 to 3, wherein a total content of La₂O₃, Gd₂O₃, and WO₃ is 36 mol% or more.

5. A glass component using, as a material, the X-ray shielding glass according to any one of Claims 1 to 4.

## Patentansprüche

1. Röntgenstrahlen abschirmendes Glas mit einer Zusammensetzung, umfassend:
15 Massen-% bis 25 Massen-% B₂O₃;
7 Massen-% bis 50 Massen-% La₂O₃;
7 Massen-% bis 50 Massen-% Gd₂O₃;
10 Massen-% bis 25 Massen-% WO₃;
0 Massen-% bis 7 Massen-% SiO₂;
0 Massen-% bis 10 Massen-% ZrO₂;
0 Massen-% bis 8 Massen-% Nb₂O₅;
0 Massen-% bis 10 Massen-% Ta₂O₅;
0 Massen-% bis 5 Massen-% Bi₂O₃;
0 Massen-% bis 3 Massen-% CeO₂; und
0 Massen-% bis 1 Massen-% Sb₂O₃,
wobei das Glas kein ZnO enthält,
ein Gesamtgehalt an La₂O₃ und Gd₂O₃ 45 Massen-% bis 65 Massen-% beträgt, und
wenn die Dicke des Glases 3 mm beträgt, die Durchlässigkeit des Glases für Röntgenstrahlung aus einer Röntgenröhre mit einer Röhrenspannung von 60 kV 0,0050 % oder weniger und die Durchlässigkeit des Glases für Röntgenstrahlung aus einer Röntgenröhre mit einer Röhrenspannung von 100 kV 0,1500 % oder weniger beträgt.

2. Röntgenstrahlen abschirmendes Glas nach Anspruch 1, mit einer Dichte von 5,00 g/cm³ oder mehr.

3. Röntgenstrahlen abschirmendes Glas nach Anspruch 1 oder 2, mit einem Brechungsindex (nd) von 1,855 oder weniger.

4. Röntgenstrahlen abschirmendes Glas nach einem der Ansprüche 1 bis 3, wobei der Gesamtgehalt an La₂O₃, Gd₂O₃ und WO₃ 36 Mol-% oder mehr beträgt.

5. Glasbauteil, das als Material das Röntgenstrahlen abschirmende Glas nach einem der Ansprüche 1 bis 4 verwendet.

## Revendications

1. Verre de protection contre les rayons X ayant une composition comprenant :
15 % en masse à 25 % en masse de B₂O₃;
7 % en masse à 50 % en masse de La₂O₃;
7 % en masse à 50 % en masse de Gd₂O₃;
10 % en masse à 25 % en masse de WO₃;
0 % en masse à 7 % en masse de SiO₂;
0 % en masse à 10 % en masse de ZrO₂;
0 % en masse à 8 % en masse de Nb₂O₅;
0 % en masse à 10 % en masse de Ta₂O₅;
0 % en masse à 5 % en masse de Bi₂O₃;
0 % en masse à 3 % en masse de CeO₂; et
0 % en masse à 1 % en masse de Sb₂O₃,
où le verre ne contient pas de ZnO,
la teneur totale en La₂O₃ et Gd₂O₃ est comprise entre 45 % en masse et 65 % en masse, et
lorsque l'épaisseur du verre est de 3 mm, la transmittance du verre aux rayons X émis par un tube à rayons X d'une tension de tube de 60 kV est inférieure ou égale à 0,0050 %, et la transmittance du verre aux rayons X émis par un tube à rayons X d'une tension de tube de 100 kV est inférieure ou égale à 0,1500 %.

2. Verre de protection contre les rayons X selon la revendication 1, ayant une densité de 5,00 g/cm³ ou plus.

3. Verre de protection contre les rayons X selon la revendication 1 ou 2, ayant un indice de réfraction (nd) de 1,855 ou moins.

4. Verre de protection contre les rayons X selon l'une des revendications 1 à 3, où la teneur totale en La₂O₃, Gd₂O₃ et WO₃ est supérieure ou égale à 36 % en moles.

5. Composant en verre utilisant comme matériau le verre de protection contre les rayons X selon l'une des revendications 1 à 4.
